Europäisches Patentamt

European Patent Office

Office européen des brevets

(11) Publication number: **0 274 855**
**A1**

## (12) EUROPEAN PATENT APPLICATION

(21) Application number: **87310685.0**

(22) Date of filing: **04.12.87**

(51) Int. Cl.⁴: **G02B 6/28**

(30) Priority: **05.12.86 GB 8629123**

(43) Date of publication of application:
**20.07.88 Bulletin 88/29**

(84) Designated Contracting States:
**DE FR**

(71) Applicant: **Hussey, Conleth Denis**
**22 Kingsfold Avenue Townhill Park**
**Southampton Hampshire, S02 2PZ(GB)**

Applicant: **Minelly, John Douglas**
**56 Vine Road**
**Coxford Southampton Hampshire, S01 6AT(GB)**

(72) Inventor: **Hussey, Conleth Denis**
**22 Kingsfold Avenue Townhill Park**
**Southampton Hampshire, S02 2PZ(GB)**
Inventor: **Minelly, John Douglas**
**56 Vine Road**
**Coxford Southampton Hampshire, S01 6AT(GB)**

(74) Representative: **Cullis, Roger**
**Patent Department National Research Development Corporation 101 Newington Causeway**
**London SE1 6BU(GB)**

(54) **Fibre optic components.**

(57) A multiport fibre optic transfer device has at least three monomode fibre transfer ports (1,2,3) and a coupling device between them, the coupling device (5) including a section of optical fibre adapted to transfer an optical signal received from at least one transfer port as a cladding mode.

EP 0 274 855 A1

Fig. 1

## FIBRE OPTIC COMPONENTS

This invention relates to fibre optic components. In particular it finds application in fibre optic beam splitters in which the splitting ratio is independent of wavelength and will complement existing single mode fibre components such as the fused tapered coupler in the construction of single mode fibre communication and signal processing networks.

According to the present invention there is provided a multiport fibre optic transfer device having at least three input and output ports comprising monomode fibres and a coupling device between said input and output ports wherein said coupling device includes a section of optical fibre adapted to transfer an optical signal received from at least one input port as a cladding mode.

The invention will now be described by way of example with reference to the accompanying drawings in which:-

Figure 1 shows a Y-junction device with a single input port and two output ports

Figure 2 is an illustration showing evolution of a propagating field

Figure 3a-c shows the structure of a four-port coupler; and

Figures 4a-c illustrates the abuttment of fibres to form a coupling device

In one embodiment, a fibre optic coupling device has a Y-junction configuration with the stem as the input port 1 and the fork as the output ports 2,3. A tapered fibre 4 which forms the stem of the Y is spliced to half of a fused tapered coupler 5 which forms the fork. While Y-junctions have previously been used for multimode optical fibre beam splitters, it is the tapering that plays the key role in extending the technology to single mode optical fibres.

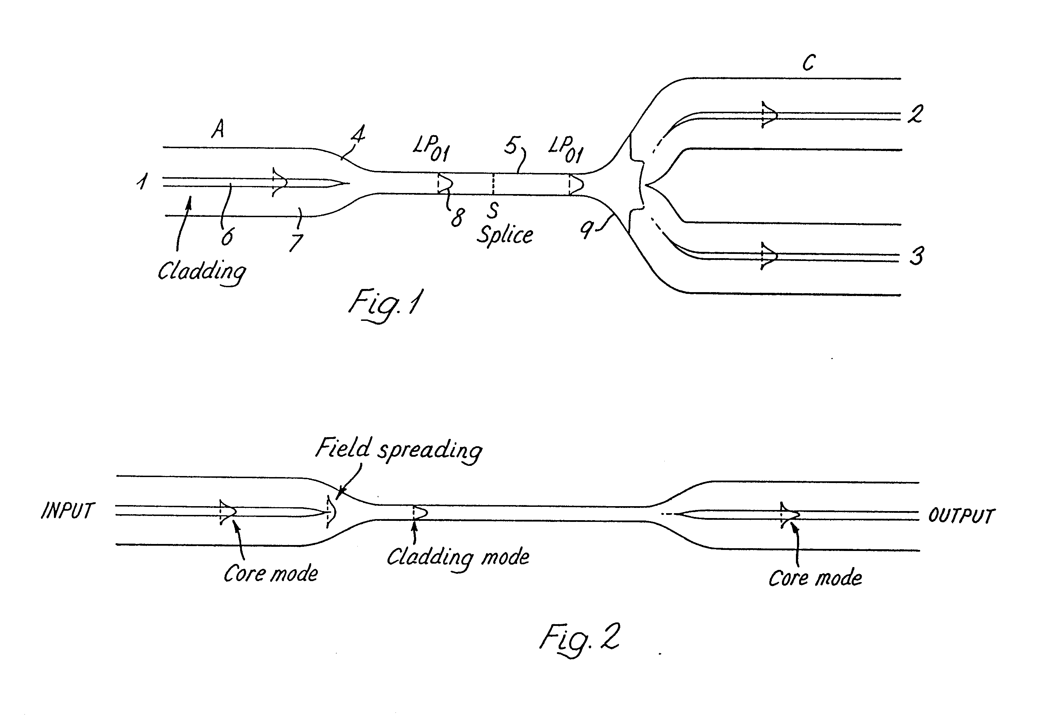

The tapering has a significant effect on the propagating optical field as is travels along the single mode optical fibre. The evolution of the field is shown schematically in Figure 2. Initially the field is guided by the core 6 of the input fibre 7. As the core diameter decreases, the field 8 spreads out. Eventually, a point is reached when the field is no longer guided by the core, but is effectively guided by the waveguide consisting of the fibre cladding and the surrounding medium. This new waveguide is highly multi-moded. However, if the taper rate is low enough, that is, the taper is adiabatic, the power will remain in the lowest order ($LP_{01}$) mode from which all of the power can be recaptured into the core at the output side of the taper 9.

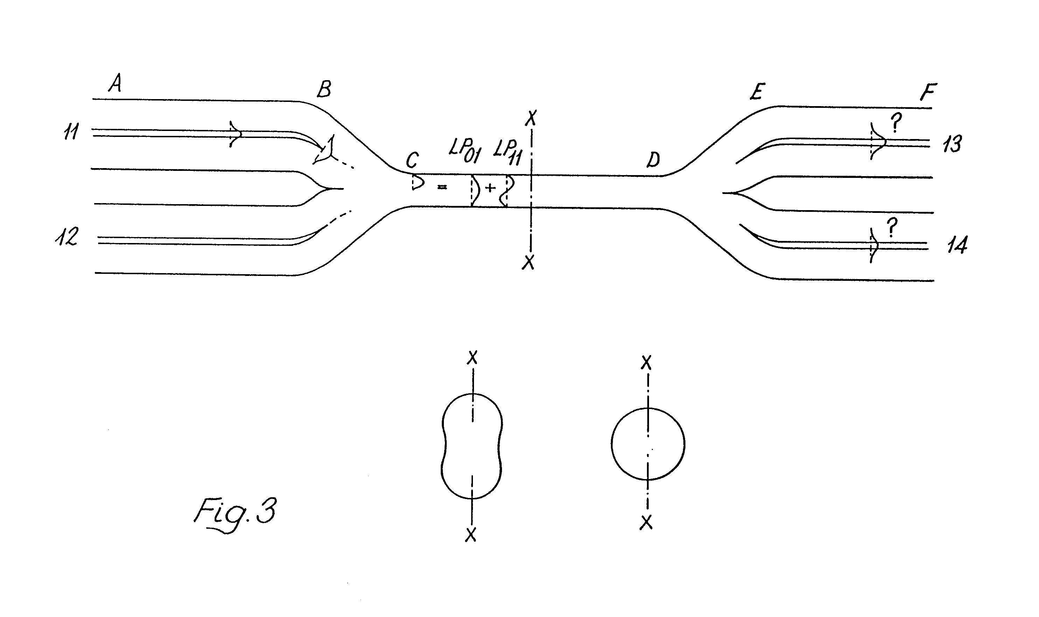

In a fused taper coupler, it is again the tapering that allows the device to operate. The structure of a 4-port directional coupler is shown in Figure 3a.

Section AB consists of two input fibres (ports 11 and 12). In section BC, the fibres are fused together and tapered adiabatically. Section CD consists of a nearly parallel section where the cross-section can be either a dumb-bell shape or a circular shape as shown in figure 3b and 3c. Section EF contains the two output fibres (ports 13 and 14).

An optical field propagating along the input fibre AB will expand as it comes down the taper BC until it becomes a cladding mode. The cladding mode, on reaching the straight section CD, because of its asymmetric position in the structure, excites two modes. These are the two lowest order even ($LP_{01}$) and odd ($LP_{11}$) modes of the composite waveguide. The interference between these two cladding modes produces the coupling characteristics. The behaviour of the two cladding modes depends on the wavelength of the incoming optical field, on the dimensions and geometry of the cross-section and on the refractive index of the surrounding medium. As a consequence, the output response of the coupler is very wavelength dependent.

The present invention permits the combination of the properties of the simple taper and the tapered coupler to produce a device which has equal power in the output ports regardless of the wavelength. The operation of the device is described with reference to Figure 1. Section AB is a single mode fibre tapered adiabatically at least until the mode becomes a cladding mode. This mode, in passing through the splice S excites only the lowest order ($LP_{01}$) mode in the half coupler. The half coupler BC has also been adiabatically tapered and circularly fused to provide a good match with the circular taper fibre at the splice. As there is now only one mode in the coupler cross-section, there can be no interference effects and the power distributes equally between the two output ports irrespective of wavelength or of the refractive index of the external medium.

The embodiment described comprises a three-port device where the power in the input port is divided equally between the two output ports. However, there is no restriction in principle of the number of output ports for which equal power splitting will still occur. The input and output fibres will normally be identical, although, in general, the input fibre can be a completely different fibre (diameter and refractive index).

It has long been attempted to construct a wavelength insensitive 4-port coupler for use mainly in wavelength multiplexed single mode fibre networks. This effect has been achieved with fused taper coupler technology using fibres of different diameter or profile or by tapering one of two identical fibres more than the other prior to fabrication. This device has a slow wavelength variation over a restricted wavelength range and is clearly useful when all four ports of the coupler are required. However, in most networks, couplers are used as simple beam splitters, the second port being redundant. It is in these areas that the present invention will find most application, with the advantage that the response is truly wavelength independent.

There are two main approaches to the fabrication of the device. The first is to use existing techniques to produce low loss taper and a low loss tapered coupler with near circular fusion. It is then necessary to cleave both the taper and the coupler at the waist to provide a good diameter match at the splice point. The half-taper and half-coupler are then butt-spliced either in a electric arc or with a low index adhesive.

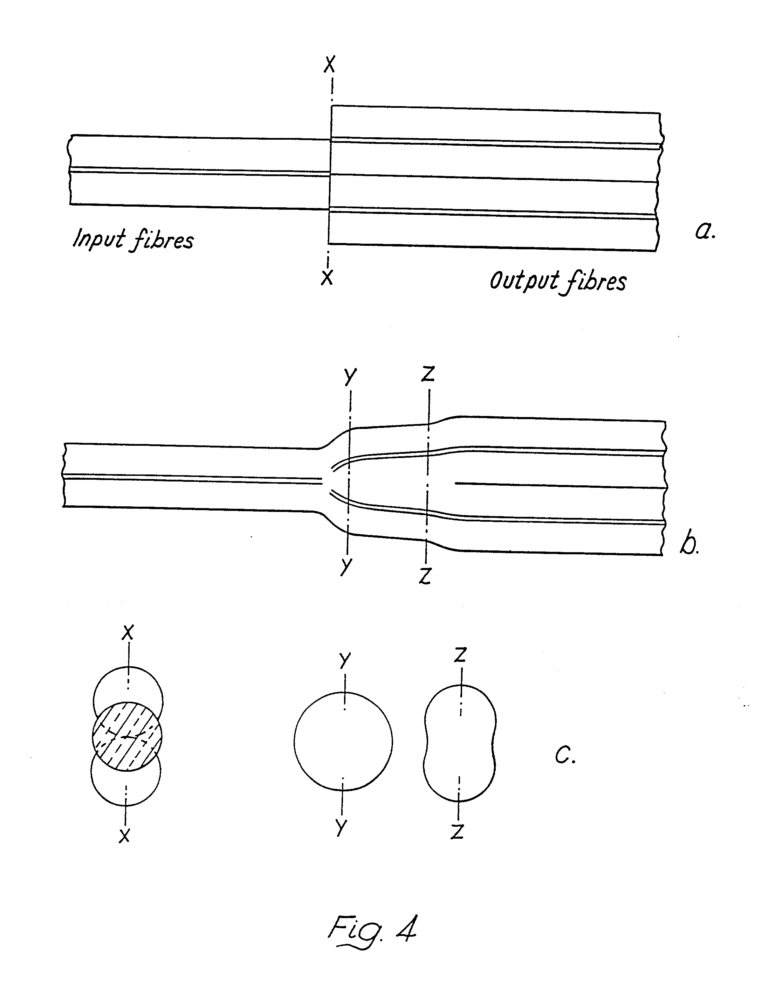

An alternative approach is to butt three fibres in the manner indicated in Figure 4a, where each fibre end has been prepared as for normal fusion splicing. The two output fibres are arranged an intimate contact with the ends aligned. The input fibre is then butted to the centre of this arrangement. The fibres are then fused together with an electric arc to produce the structures in Figure 4b. This structure is subsequently tapered to yield the device as in Figure 1. The packaging of the device is identical with that for the fused tapered coupler.

As with the fused tapered coupler, the present device has good temperature stability and mechanical rigidity. However, the cleaving and splicing procedure as outlined above in the first construction method, does add one additional stage in the production process. Method two, on the other hand, is quite straightforward with standard cleaving and splicing tools.

Loss in the present device will occur mainly at the splice and can be due to size or shape mismatch, field mismatch across the splice (depends on the degree of tapering) and normal splice loss.

An example of such a device was constructed by the first method outlined above. Using single mode fibre with a cut-off wavelength of 650nm and a diameter of 80μm, the output splitting ratio was wavelength flat up to the limit of the measurement range of 1000nm. Devices have also been made with standard fibre (diameter 125μm) and losses of value down to 1.5dB have been achieved.

## Claims

1. A multiport fibre optic transfer device having at least three transfer ports comprising monomode fibres and a coupling device between said transfer ports characterised in that said coupling device (5) includes a section of optical fibre (4) adapted to transfer an optical signal received from at least one transfer port as a cladding mode.

2. A multiport fibre optic transfer device as claimed in claim 1 characterised in that said section of optical fibre includes a tapered section (4).

3. A multiport fibre optic transfer device as claimed in claim 1 characterised in that the taper of said tapered section (4) is adiabatic.

4. A multiport fibre optic transfer device as claimed in claim 1 characterised in that said section of optical fibre includes a region of substantially uniform cross-section (X-X).

5. A multiport fibre optic transfer device as claimed in claim 4 characterised in that said cross-section is dumb-bell shaped.

6. A multiport fibre optic transfer device as claimed in claim 4 characterised in that said cross-section is substantially circular.

7. A method of manufacture of fibre optic transfer devices characterised in that it comprises the steps of producing a tapered length of fibre and a length of fibre of substantially uniform circular cross-section, cleaving said lengths to produce substantially matching splice surfaces and butt-splicing said splice surfaces.

8. A method of manufacture of fibre optic transfer devices characterised in that it comprises the steps of preparing the ends of three fibres for normal fusion splicing, butting the three ends together, fusing the fibres and subsequently tapering the region adjacent the join.

**Fig.1**

A — 1, 6 Cladding, 7 — 4 — $LP_{01}$ — 5 $LP_{01}$ — 8 Splice — S — 9 — C — 2, 3

**Fig.2**

INPUT — Core mode — Field spreading — Cladding mode — OUTPUT — Core mode

Fig.3

A B X E F
11 C LP$_{01}$ LP$_{11}$ D ? 13
= )+) ?
12 ? 14
X

X

Input fibres

X

Output fibres

*a.*

Y          Z

Y          Z

*b.*

X

X

Y

Y

Z

Z

*c.*

*Fig. 4*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 392 712 (OZEKI) * column 3, lines 30-48; column 4, lines 28-69; column 5, line 60 - column 6, line 37; figures 3, 4B, 9 * | 1,2,5 | G 02 B 6/28 |
| X | PATENT ABSTRACTS OF JAPAN, vol. 8, no. 42 (P-256)[1479], 23rd February 1984; & JP - A - 58 193 514 (TOKYO SHIBAURA DENKI K.K.) 11-11-1983 * abstract; figures * | 1,2,4,6 | |
| X | APPLIED OPTICS, vol. 22, no. 12, June 1983, pages 1918-1922, New York, US; J. BURES et al.: "Analyse d'un coupleur bidirectionnel à fibres optiques monomodes fusionées" * whole article * | 1,2,5 | |
| A | ELECTRONIC LETTERS, vol. 21, no. 19, September 1985, pages 864-865, Stevenage, GB; A.C. BOUCOUVALAS et al.: "Biconical taper coaxial optical fibre coupler" * whole article * | 3 | TECHNICAL FIELDS SEARCHED (Int. Cl.4) G 02 B 6/00 |

The present search report has been drawn up for all claims

| Place of search | Date of completion of the search | Examiner |
|---|---|---|
| BERLIN | 29-03-1988 | KEMSLEY E.E.K. |